# EUROPEAN PATENT APPLICATION

(11) **EP 4 841 199 A1**
(43) Date of publication of application: **18.11.2026**
(21) Application number: 25176836.2
(22) Date of filing: 15.05.2025
(51) Int. Cl.: F28D 9/00, B60H 1/00, B60H 1/32, F28F 3/04, F28F 3/12, F28D 21/00

(54) **MANIFOLD FOR USE IN A REFRIGERANT LOOP**

(71) Applicant: Valeo Electrification, 95892 Cergy Pontoise (FR)
(72) Inventor: BELZOWSKI, Michal, 32 050 Skawina (PL); JURKIEWICZ, Damian, 32 050 Skawina (PL); NOWAKOWSKI, Adrian, 32 050 Skawina (PL)
(74) Representative: Valeo Powertrain Systems

(57) **Abstract**

An assembly (100) comprising:
- at least two heat exchangers (2, 3), each heat exchanger having associated inlet/outlet ports;
- a manifold (1) configured to be assembled with the at least two heat exchangers (2, 3),
- wherein the manifold (1, 110) is fluidically connected to each of the heat exchangers (2, 3) and the manifold comprising:
∘ a first plate that is mainly flat;
∘ an intermediate plate having corrugations;
∘ a second plate that is mainly flat.

## Description

The present invention relates to a manifold for use particularly in a refrigerant loop, for instance in automotive applications.

Stamped components offer a favorable price-to-quality ratio and high repeatability. They can be brazed after forming to create complex closed structures, such as plate type heat exchangers. Modern vehicles, especially electric vehicles, exhibit a trend towards increased integration of components within the refrigerant loop. These assemblies often feature various operating modes, such as AC, heat pump, and fast charging, necessitating controlled refrigerant flow through different paths using valves.

Refrigerant loops may include a range of components, including heat exchangers (water condenser, chiller, internal heat exchanger IHX), receiver dryers, compressors, and smaller components like mufflers. To enhance cost-effectiveness, efficiency, and compactness, higher integration of these components is desirable. However, stamping has limitations in terms of achievable material thickness and shape complexity.

The present invention aims to overcome these limitations.

The present invention related to a manifold configured to be assembled with at least two heat exchangers, each heat exchanger having associated inlet/outlet ports, said manifold comprising:
- a first plate that is mainly flat;
- an intermediate plate having corrugations;
- a second plate that is mainly flat,
wherein the intermediate plate is placed between the first plate and the second plate and the corrugations of the intermediate plate are configured to create channels for a fluid, in particular a refrigerant, said channels being in fluid communication with at least an fluid inlet/outlet port made in the first plate or the second plate, said fluid inlet/outlet port being configured to be fluidically connected to the inlet/outlet port of one of the heat exchanger, and the channels being arranged in at least two levels for conducting fluid, with one level defined between the first plate and the intermediate plate and the other level defined between the second plate and the intermediate plate, said levels being configured for two fluid flows, either of the same fluid kept separate or of two different fluids.

The stacked plates (first plate, intermediate plate, second plate) form the levels for two fluid flows.

In an embodiment, the fluid flows in the respective levels have distinct operating points. In particular, the fluid flows correspond to different sections of a fluid loop, and are not mere subdivisions of a single flow. The flows potentially exhibit different pressure and temperature conditions. The two fluid flow levels are configured to enable heat exchange between their respective fluids, with the intermediate plate serving as a thermal interface therebetween.

The term 'mainly flat' as used herein together with the plate, signifies that at least 80%, in particular at least 90%, of the plate's overall surface area exhibits a planar configuration. Some areas of the plate, especially along the periphery, can be non-flat, for example to form a raised edge, and the rest of the plate is flat.

The manifold is configured to conduct fluid between components, for instance at least two heat exchangers, of a refrigerant loop.

The present invention also relates to an assembly comprising:
- at least two heat exchangers,
- a manifold configured to be assembled with the at least two heat exchangers, each heat exchanger having associated inlet/outlet ports, said manifold comprising:
   ∘ a first plate that is mainly flat;
   ∘ an intermediate plate having corrugations;
   ∘ a second plate that is mainly flat,
   ∘ wherein the intermediate plate is placed between the first plate and the second plate and the corrugations of the intermediate plate are configured to create channels for a fluid, in particular a refrigerant, said channels being in fluid communication with at least an fluid inlet/outlet port made in the first plate or the second plate, said fluid inlet/outlet port being configured to be fluidically connected to the inlet/outlet port of one of the heat exchanger, and the channels being arranged in at least two levels for conducting fluid, with one level defined between the first plate and the intermediate plate and the other level defined between the second plate and the intermediate plate, said levels being configured for two fluid flows, either of the same fluid kept separate or of two different fluids,
- wherein the manifold is fluidically connected to each of the heat exchangers, in particular by brazing, and at least one of the heat exchangers is fixed to the first plate or the second plate, either directly or via a connection block.

According to an aspect of the invention, the first plate and/or the second plate of the manifold comprise an assembly portion, such as a raised edge.

According to an aspect of the invention, the intermediate plate of the manifold is a stamped plate with the corrugations.

According to an aspect of the invention, the corrugations of the intermediate plate are formed by stamped ribs.

According to an aspect of the invention, at least one of the stamped ribs follows a closed line.

According to an aspect of the invention, the intermediate plate comprises an assembly portion, such as a peripheral raised edge.

According to an aspect of the invention, the first plate and the second plate are connected to the intermediate plate, in particular by being brazed together.

According to an aspect of the invention, the stacked plates create channels conducting different fluids.

According to an aspect of the invention, the channels are positioned parallel to each other, one above the other in different fluid conducting levels, to promote heat exchange.

According to an aspect of the invention, the channels are configured in different layers so that the channels have a crossing configuration without mixing.

According to an aspect of the invention, the corrugations have additional openings to enable mixing of the fluid between sub-channels.

According to an aspect of the invention, the corrugations have a sinusoidal, trapezoidal, triangular, or other shape.

According to an aspect of the invention, the first plate and/or the second plate further comprise additional holes not connected with the channels. Said holes are configured for degassing, or for assembly points.

According to an aspect of the invention, the manifold comprises at least two intermediate plates, each being sandwiched between plates are mainly flat.

According to an aspect of the invention, the manifold comprises five plates stacked in the following order: a first plate that is mainly flat, an intermediate plate having corrugations, a second plate that is mainly flat, an additional intermediate plate having corrugations, and a third plate that is mainly flat

According to an aspect of the invention, the manifold is configured for a circulation of an additional fluid, such as a coolant, in addition to a refrigerant.

According to an aspect of the invention, the corrugations of the intermediate plate are configured to create more than one channel connecting inlet/outlet ports of the manifold.

According to an aspect of the invention, the corrugations create only a single channel.

Alternatively, the corrugations create a plurality of channels.

According to an aspect of the invention, the manifold comprises a plurality of stacked plates made in a same material, such as aluminum.

According to an aspect of the invention, the stacked plates comprise at least the first plate, the intermediate plate and the second plate.

Alternatively, the manifold comprises a plurality of stacked plates made in different materials.

According to an aspect of the invention, the manifold comprises a plurality of stacked plates having the same shape.

Alternatively, the manifold comprises a plurality of stacked plates having different shapes.

According to an aspect of the invention, the manifold comprises a plurality of stacked plates configured to create at least one thermal isolation layer.

According to an aspect of the invention, the isolation layer is made of air within the stacked plates.

According to an aspect of the invention, the isolation layer may be created by reducing the number of corrugations connecting the first plate and the second plate, thereby limiting heat transfer. Corrugations may be seen for example as vertical walls.

According to an aspect of the invention, the thermal isolation layer is free of fluid circulation.

According to an aspect of the invention, at least one level comprises both a fluid-circulation-free isolation layer and at least one fluid circulation channel.

According to an aspect of the invention, the manifold comprises 3 or more layers, an isolation layer is placed between levels conducting fluid.

According to an aspect of the invention, the thickness of the first and second plates is different from the thickness of the intermediate plate.

According to an aspect of the invention, the thickness of the first and second plates is between 0.8 and 3 mm, preferably between 1 and 2 mm.

According to an aspect of the invention, the thickness of the intermediate plate is between 0.2 and 1 mm, preferably between 0.4 and 0.6 mm.

According to an aspect of the invention, the manifold is configured to conduct fluid between components of a refrigerant loop.

According to an aspect of the invention, the manifold is brazed to the heat exchanger.

According to an aspect of the invention, at least a plate of the manifold is directly brazed to the heat exchanger.

According to an aspect of the invention, at least one of the plates of the manifold can be created by a closing plate (and end plate) of exchanger.

According to an aspect of the invention, the manifold is configured to be assembled with an internal heat exchanger (IHX).

According to an aspect of the invention, the manifold is configured to integrate an internal heat exchanger (IHX) where the intermediate plate serves as a heat transfer surface between a first refrigerant flow on one side of the intermediate plate and a second refrigerant flow on the other side of the intermediate plate.

According to an aspect of the invention, the manifold is configured to withstand working pressures of refrigerants, such as R290 or R744.

According to an aspect of the invention, the manifold is configured to be assembled with various components, such as a water condenser (WCDS), a chiller, or an expansion valve.

According to an aspect of the invention, the manifold is configured to be assembled with a compressor and/or a receiver dryer (RD) and/or an accumulator.

According to an aspect of the invention, the manifold is configured to be assembled with at least two heat exchangers on both sides of the manifold.

Alternatively, the manifold is configured to be assembled with at least one heat exchanger on only one side of the manifold. The other side of the manifold has no heat exchanger.

According to an aspect of the invention, the manifold comprises a fluid transfer zone configured to allow a fluid flow from a heat exchanger, such as a water condenser, to a fluid component, such as a receiver dryer.

According to an aspect of the invention, the transfer zone comprises a forward path directing fluid towards the fluid component and a return path directing fluid back to the heat exchanger.

According to an aspect of the invention, the transfer zone comprises two distinct fluid levels separated by the intermediate plate.

In particular, the forward path and the return path both comprise two distinct fluid levels separated by the intermediate plate.

According to an aspect of the invention, the transfer zone comprises corrugations, for instance formed by stamped ribs. The stamp ribs are for instance straight lines.

According to an aspect of the invention, the intermediate plate comprises cutouts at the ends of the fluid paths for the fluid circulation within the transfer zone across the two levels.

According to an aspect of the invention, the transfer zone has no substantial internal heat exchange function (between fluid flows).

The receiver dryer is configured to separate liquid and gas of the refrigerant.

According to an aspect of the invention, only the liquid from the receiver dryer is directed back towards the water condenser.

According to an aspect of the invention, the liquid sent back to the water condenser in liquid state (from the receiver dryer) will provide a further pass in the water condenser for further subcooling of the fluid.

According to an aspect of the invention, the intermediate plate comprises at least one dimple. the first plate and/or the second plate comprises at least one dimple.

The dimples are configured to promote turbulence within the fluid flow.

According to an aspect of the invention, the intermediate plate comprises a channel around an external edge, wherein the channel forms a closed volume that encloses the other channels transferring the refrigerant.

According to an aspect of the invention, the manifold further comprises a port connected to this volume and a sensor, in particular a pressure sensor, configured to detect an internal leakage in said volume.

According to an aspect of the invention, the manifold is configured such that leaks from said volume are directed, either directly or through additional components, to a predefined area, such as the external environment.

According to an aspect of the invention, the manifold comprises a sensor type other than a pressure sensor, configured to decrease a leak level rate at which a leak is detected.

According to an aspect of the invention, a thickness of the intermediate plate is adjusted such that the intermediate plate comprises a weak point, and a failure mode comprises a leak through the weak point from the volume to a predefined area.

According to an aspect of the invention, the manifold comprises at least two intermediate plates, each being sandwiched between plates that are mainly flat, and wherein plates and plates respectively create different levels for fluid flows, and plates define a channel to deliver refrigerant to two parallel branches each having an expansion valve and a chiller, and plates are added to create two additional channels to deliver the refrigerant from each expansion valve to the associated chiller.

According to an aspect of the invention, the manifold is configured such that a high pressure channel delivering refrigerant to expansion valves is provided on one level, whereas a low pressure channel delivering refrigerant from chillers to an outlet block is positioned on two levels.

According to an aspect of the invention, one heat exchanger is a water condenser and another heat exchanger is a chiller, and wherein the manifold is configured such that:
- subcooled refrigerant from the water condenser flows through an inlet port into the manifold, between the first plate and the intermediate plate, and towards an outlet port connected to an expansion valve; and
- low-pressure refrigerant from the chiller flows through an inlet port into the manifold, between the intermediate plate and the second plate, and towards an outlet port connected to a compressor.

The invention further relates to an air conditioning circuit of the heat pump type, in particular of the direct type, incorporating a refrigerant assembly as described above.

Further features, details, and advantages of the invention will become more apparent upon the following description, and from several illustrative and non-limitative embodiments presented with reference to the annexed schematic drawings, wherein:
- Figure 1 schematically illustrates an assembly according to one embodiment of the invention;
- Figure 2 depicts the assembly of Figure 1 without the Chiller;
- Figure 3 schematically shows, in perspective view, the plates forming the manifold of the assembly in the example of Figure 1;
- Figure 4 schematically illustrates the refrigerant circulation on one side of the manifold of Figure 3;
- Figure 5 is a perspective view of the manifold alone;
- Figure 6 schematically illustrates the refrigerant circulation on the side of the manifold opposite to that shown in Figure 4;
- Figure 7 illustrates, in isolated perspective view, the intermediate plate of the manifold of the example of Figure 1;
- Figure 8 illustrates an assembly according to another exemplary embodiment of the invention;
- Figure 9 shows the various channels within the manifold of the assembly of Figure 8;
- Figure 10 illustrates a cross-section of the manifold of the assembly of Figure 8;
- Figure 11 is a schematic diagram of a loop in which the assembly of Figure 1 is integrated.

The features, variations, and different embodiments of the invention can be associated with each other in various combinations, insofar as they are not incompatible 1 or mutually exclusive. In particular, one can envision variations of the invention comprising only a selection of features described hereafter in isolation from other described features, if this selection of features is sufficient to confer a technical advantage and/or to differentiate the invention from the prior art.

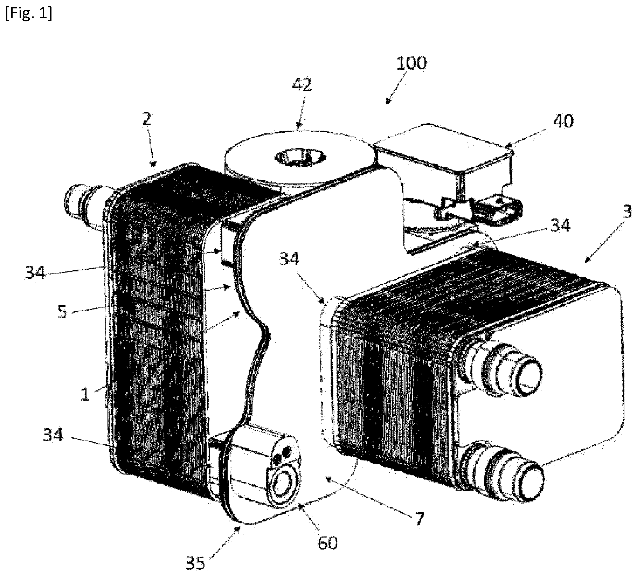

Figure 1 shows an assembly 100 comprising a manifold 1 according to an embodiment of the invention, and at least two heat exchangers 2, 3.

The heat exchanger 2 is a water condenser (WCDS) which is a high pressure exchanger, and the heat exchanger 3 is a chiller which is low pressure exchanger. The manifold 1 is configured to withstand working pressures of refrigerants, such as R290 36 or R744 37.

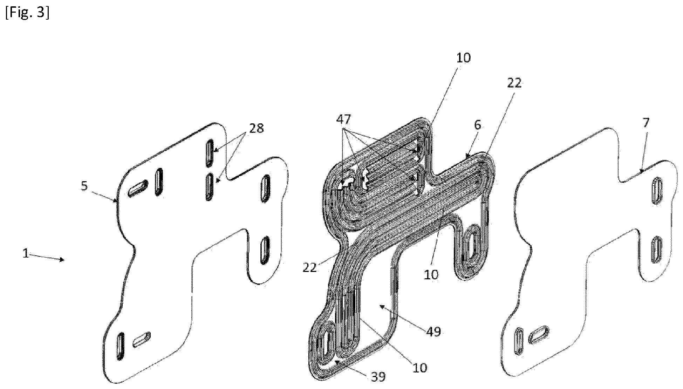

Said manifold 1 comprises a first plate 5 that is mainly flat, an intermediate plate 6 having corrugations 10, a second plate 7 that is mainly flat, as illustrated in figure 3.

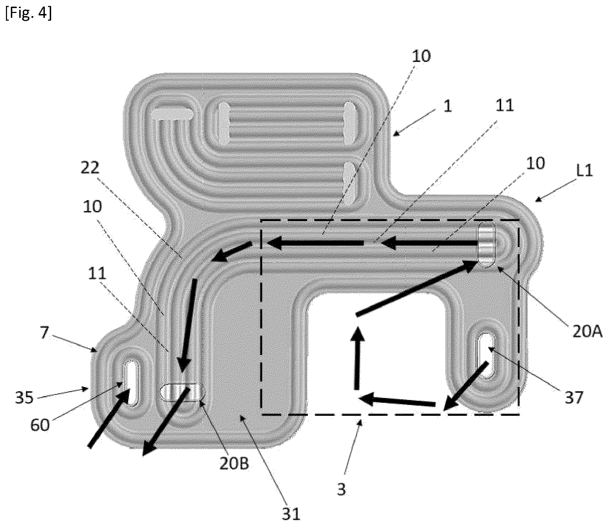

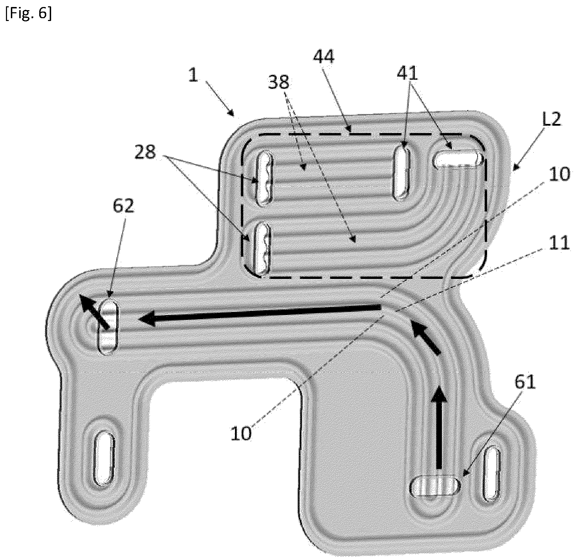

The intermediate plate 6 is placed between the first plate 5 and the second plate 7 and the corrugations 10 of the intermediate plate 6 are configured to create channels 11 for a fluid, which is a refrigerant, as illustrated in figures 4 and 6.

Said channels 11 are in fluid communication with fluid inlet/outlet ports 20A, 20B, 61, 62 (as described below) made in the first plate 5 and the second plate 7, said fluid inlet/outlet port being configured to be fluidically connected to the inlet/outlet port of one of the heat exchangers 2, 3.

The channels 11 are arranged in at least two levels L1, L2 for conducting fluid, respectively illustrated in figures 4 and 6.

The two levels L1, L2 are configured for two fluid flows, either of the same fluid kept separate or of two different fluids. The stacked plates (first plate 5, intermediate plate 6, second plate 7) form the levels L1, L2 for two fluid flows.

In an embodiment, the fluid flows in the respective levels L1, L2 have distinct operating points. In particular, the fluid flows correspond to different sections of a refrigerant loop 200, and are not mere subdivisions of a single flow. The flows potentially exhibit different pressure and temperature conditions. The two fluid flow levels L1, L2 are configured to enable heat exchange between their respective fluids, with the intermediate plate 6 serving as a thermal interface therebetween.

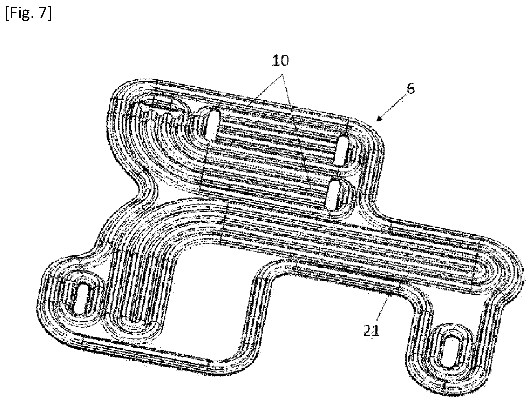

The term 'mainly flat' as used herein together with the plate 5, 7, signifies that at least 80%, in particular at least 90%, of the plate's 5, 7 overall surface area exhibits a planar configuration. Some areas of the plate 5, 7, especially along the periphery, can be non-flat, for example to form a raised edge 21 (visible on figure 7), and the rest of the plate 5, 7 is flat.

In the illustrated embodiment, the first plate 5 and the second plate 7 are entirely (100%) flat, as visible in figure 3.

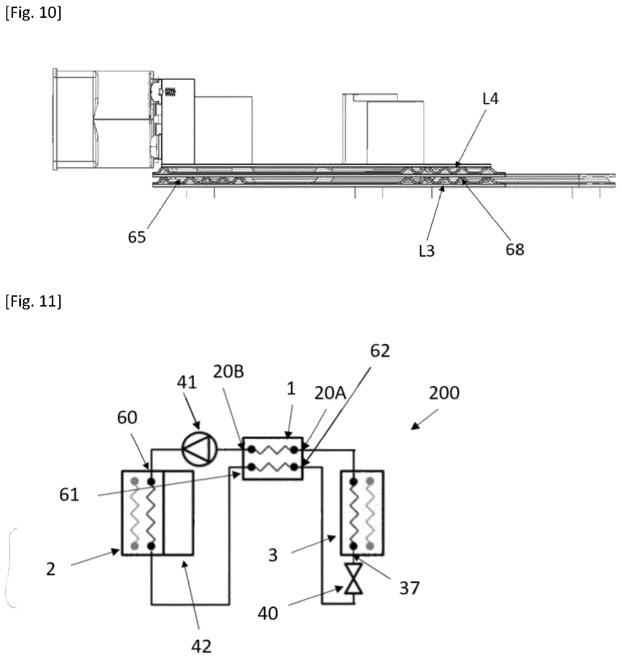

The manifold 1 is configured to conduct fluid between the heat exchangers 2, 3, of a refrigerant loop 200 as illustrated in figure 11.

The manifold 1 and the heat exchangers 2, 3 are fluidically connected, by brazing. In particular, the heat exchangers 2 is fixed to the first plate 5 via two connection blocks 34.

The heat exchanger 3 is fixed to the second plate 7, via two other connection blocks 34.

In a variant, at least one of the plates 5, 7 of the manifold 1 can be created by a closing plate (and end plate) of exchanger 2, 3.

The intermediate plate 6 is a stamped plate with the corrugations 10. The corrugations 10 of the intermediate plate 6 are formed by stamped ribs 22. Some of the stamped ribs 22 follow a closed line.

The intermediate plate 6 comprises an assembly portion formed by the peripheral raised edge 21.

The first plate 5 and the second plate 7 are connected to the intermediate plate 6, by being brazed together.

The stacked plates 5, 6, 7 create channels 11 conducting different fluids. The channels 11 are positioned parallel to each other, one above the other in different fluid conducting levels L1 and L2, to promote heat exchange.

The channels 11 are configured in different layers L1 and L2 so that the channels 11 have a crossing configuration without mixing.

In a variant, the corrugations 10 have additional openings to enable mixing of the fluid between sub-channels.

The corrugations 10 may have a sinusoidal, trapezoidal, triangular, or other shape.

The manifold 1 is configured to be assembled with the heat exchangers 2, 3 on both sides of the manifold 1.

The channels 11 connect inlet/outlet ports of the manifold 1. The inlet/outlet ports of the manifold 1 comprise an inlet port 20A to enable refrigerant from the chiller 3 entering the manifold 1 and an outlet port 20B to enable refrigerant exiting the manifold 1 to be sent to an inlet of a compressor 41, as illustrated in figures 4 and 10.

The stacked plates 5, 6, 7 are made in a same material, such as aluminum.

The stacked plates 5, 6, 7 have the same external shape.

The thickness of the first 5 and second plates 7 is different from the thickness of the intermediate plate 6.

The thickness of the first 5 and second plates 7 is between 0.8 and 3 mm, preferably between 1 and 2 mm.

The thickness of the intermediate plate 6 is between 0.2 and 1 mm, preferably between 0.4 and 0.6 mm.

In the illustrated embodiment, the manifold 1 is configured to integrate an internal heat exchanger 35 (IHX) where the intermediate plate 6 serves as a heat transfer surface between a first refrigerant flow on one side of the intermediate plate 6 and a second refrigerant flow on the other side of the intermediate plate 6.

The manifold 1 is configured to be assembled with an expansion valve 40 with high pressure at entrance, and low pressure at outlet.

The manifold 1 is configured to be further assembled with receiver dryer (RD) 42.

The first plate 5 further comprises additional holes 28 not connected with the channels 11 dedicated to heat exchange. Said holes 28 are configured for degassing, and are connected to the receiver dryer 42, as inlet/outlet to the receiver dryer 42. Said holes 28 are connected to channels 38 in the manifold 1 for fluid circulation between the receiver dryer 42 and the water condenser 2 via holes 41 in the manifold 1 (see figure 6). Channels 38 are not dedicated to heat exchange between two fluids, and define a fluid transfer zone 44 configured to allow a fluid flow from the heat exchanger 2 to the receiver dryer 42.

The receiver dryer 42 is configured to separate liquid and gas of the refrigerant.

The transfer zone 44 comprises a forward path directing fluid towards the receiver dryer 42 and a return path directing fluid back to the heat exchanger 2.

The transfer zone 44 comprises two distinct fluid levels separated by the intermediate plate 6. In particular, the forward path and the return path (formed by the channels 38) both comprise two distinct fluid levels separated by the intermediate plate 6.

The transfer zone 44 comprises corrugations 10 to form channels 38. The stamp ribs 22 are for instance straight lines or curved lines.

The intermediate plate 6 comprises cutouts 47 at the ends of the channels 38 for the fluid circulation within the transfer zone 44 across the two levels (see figure 3).

The transfer zone 44 has no substantial internal heat exchange function (between fluid flows).

The liquid sent back to the water condenser 2 in liquid state (from the receiver dryer 42) will provide a further pass in the water condenser 2 for further subcooling of the fluid.

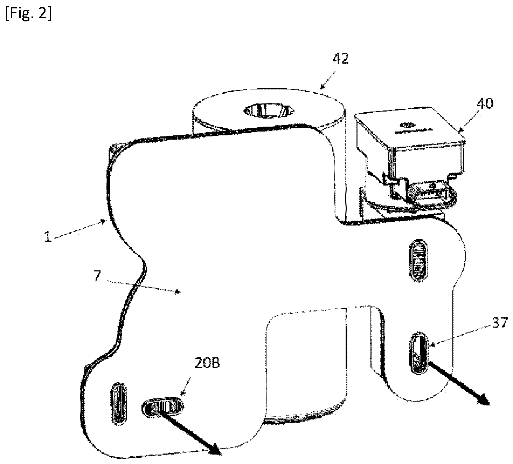

At the chiller 3 side, the expansion valve 40 outlet is connected to chiller connection port 37 of the manifold 1 where low pressure refrigerant is delivered to the chiller 3, as illustrated in figures 2 and 4.

The refrigerant then flows through the chiller 3. Subsequently, the still cold, low pressure refrigerant flows between the intermediate corrugated plate 6 and the second plate 7 from the chiller side, to the outlet 20B from the manifold 1 connected with the inlet of the compressor 41.

The water condenser 2 is connected to the outlet of the compressor 41 via a port 60 of the manifold 1 (see figure 1).

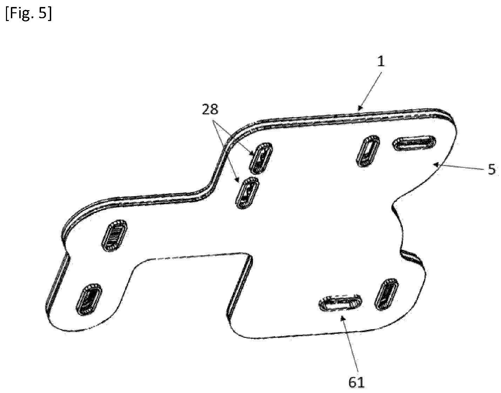

At the water condenser 2 side, subcooled refrigerant from the water condenser 2 flows through the inlet port 61 (see figures 5 and 6) to the manifold 1 and then flows between the corrugated plate 6 and the first plate 5, to the outlet port 62 to the expansion valve 40.

The subcooled high pressure refrigerant flow in the manifold 1 between the inlet port 61 and the outlet port 62 has a higher temperature than the low pressure refrigerant flow between the inlet port 20A and the outlet port 20B.

Due to the fact that the intermediate plate 6 can be made from a material with good thermal conductivity (i.e. aluminum, but other metals can be used) and due to the shape ensuring a significant contact area for both fluids, this region of the manifold 1 can function as an efficient internal heat exchanger (IHX).

The IHX increases the overall performance of the system by further cooling the refrigerant after the water condenser by transferring energy to the low pressure refrigerant before the compressor 41.

Potentially the intermediate plate 6 and/or the first plate 5 and/or the second plate 7 comprises at least one dimple configured to promote turbulence within the fluid flow.

According to an aspect of the invention, the intermediate plate 6 comprises a channel 39 around an external edge, wherein the channel 39 forms a closed volume 49 that encloses the other channels 11 transferring the refrigerant (see figure 3). According to an aspect of the invention, the manifold 1 further comprises a port connected to this volume 49 and a sensor, in particular a pressure sensor, configured to detect an internal leakage in said volume.

The manifold 1 is configured such that leaks from said volume 49 are directed, either directly or through additional components, to a predefined area, such as the external environment.

The manifold 1 comprises a sensor type other than a pressure sensor, configured to decrease a leak level rate at which a leak is detected.

A thickness of the intermediate plate 6 may be adjusted such that the intermediate plate 6 comprises a weak point, and a failure mode comprises a leak through the weak point from the volume 49 to a predefined area.

The manifold's 1 design, with its mainly flat external plates 5, 7 and corrugated intermediate plate 6, enhances mechanical resistance.

It may allow for the use of thinner materials and reducing the overall weight and cost of the assembly 100.

The flat external plates 5, 7 (first and second plates) enable the manifold 1 to be globally flat while still providing a reasonable cross-section for fluid flow.

The manifold 1 can integrate an IHX 35 by utilizing the intermediate plate 6 as a heat transfer surface, eliminating the need for a separate component and further improving packaging.

The use of stamped plates 5, 6, 7 and the brazing process makes the manifold 1 cost-effective to manufacture.

The invention facilitates the brazing process by providing a flat surface for brazing the heat exchangers 2, 3.

In the present embodiment, the manifold 1 is assembled with heat exchangers 2, 3 being on opposite sides of the manifold 1.

The plurality of stacked plates 5, 6, 7 may be configured to create at least one thermal isolation layer 31.

The isolation layer 31 is made of air within the stacked plates 5, 6, 7.

The isolation layer 31 may be created by reducing the number of corrugations 10 (vertical walls) connecting the first plate 5 and the second plate 7, thereby limiting heat transfer.

The thermal isolation layer is free of fluid circulation. At least one level L1 or L2 may comprise both a fluid-circulation-free isolation layer 31 and at least one fluid circulation channel 11.

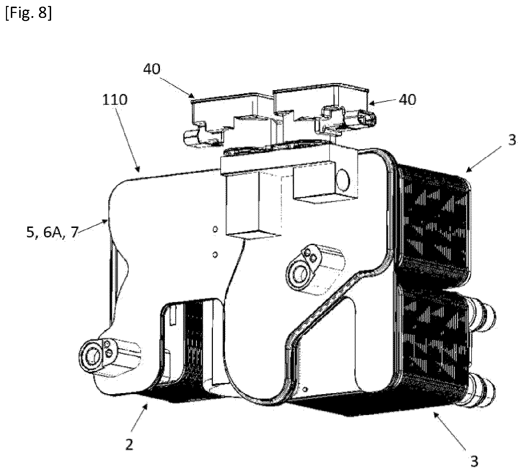

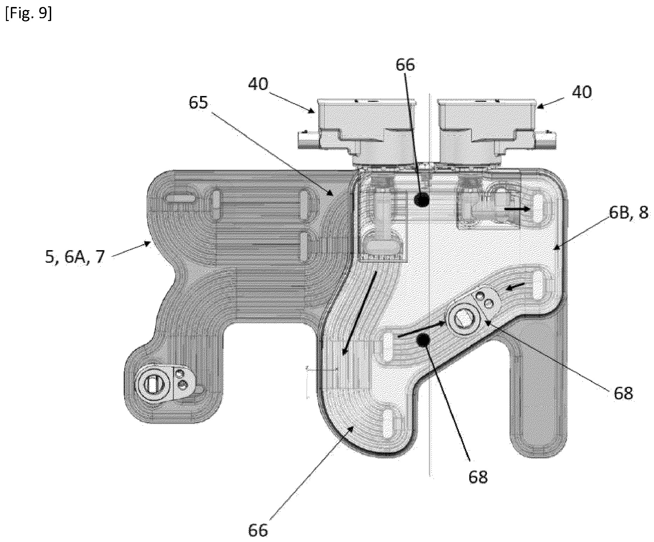

In a variant illustrated in figures 8 to 10, the manifold 110 is configured to be assembled with the heat exchangers 2, 3 on only one side of the manifold 1.

The other side of the manifold 1 has no heat exchanger.

In this embodiment, the manifold 1 comprises two intermediate plates 6, each being sandwiched between plates 5, 7, 8 are mainly flat.

The manifold 1 comprises five plates stacked in the following order: a first plate 5 that is mainly flat, an intermediate plate 6A having corrugations 10, a second plate 7 that is mainly flat, an additional intermediate plate 6B having corrugations 10, and a third plate 8 that is mainly flat.

Plates 5, 6A, 7 have a same shape.

Plates 6B, 8 have a same shape but different from shape of plates 5, 6A, 7.

Plates 5, 6A, 7 and plates 7, 6B, 8 respectively create different level for fluid flows.

Plates 5, 6A, 7 are substantially similar to plates 5, 6, 7 of the preceding embodiment, and define a channel 65 to deliver refrigerant to two parallel branches each having an expansion valve 40 and a chiller 3 (instead of only one expansion valve/chiller in the preceding embodiment).

Plates 6B, 8 are added to create two additional channels 66 to deliver the refrigerant from each expansion valve 40 to the associated chiller 3.

Plates 6B, 8 further comprises a channel 67 to collect refrigerant from the chillers 3 to a fluid outlet block 68.

A benefit from this design is associated with the possibility to multiply flow areas as it is needed.

As shown on figure 10, the cross-section for the high pressure channel 65 (delivering refrigerant to expansion valves 40) shows that refrigerant is delivered only through one level of the manifold 1 whereas the cross-section for the low pressure channel 68 (delivering refrigerant from chillers 3 to outlet block 68) is two times bigger and positioned on two levels L3, L4 of the manifold 1. The mass flow for both channels 65, 68 in this example is the same, but due to the change of the pressure, density of the volumetric flow for the low pressure side is bigger.

Another benefit associated with the invention is that channels conducting different mediums can cross their paths. Channels can be positioned in parallel, one above another, to promote heat exchange, or, in the case of manifolds with 3 or more layers, an isolation layer can be placed between levels conducting fluid with different temperatures.

## Claims

1. An assembly (100) comprising:
- at least two heat exchangers (2, 3), each heat exchanger having associated inlet/outlet ports;
- a manifold (1, 110) configured to be assembled with the at least two heat exchangers (2, 3), said manifold (1, 110) comprising:
∘ a first plate (5) that is mainly flat;
∘ an intermediate plate (6, 6A, 6B) having corrugations (10);
∘ a second plate (7) that is mainly flat,
- wherein the intermediate plate (6, 6A, 6B) is placed between the first plate (5) and the second plate (7) and the corrugations (10) of the intermediate plate (6, 6A, 6B) are configured to create channels (11) for a fluid, in particular a refrigerant, said channels (11) being in fluid communication with at least one fluid inlet/outlet port (20A, 20B, 61, 62) made in the first plate (5) or the second plate (7), said fluid inlet/outlet port being configured to be fluidically connected to the inlet/outlet port of one of the heat exchangers (2, 3), and the channels (11) being arranged in at least two levels (L1, L2) for conducting fluid, with one level (L1, L2) defined between the first plate (5) and the intermediate plate (6, 6A) and the other level (L1, L2) defined between the second plate (7) and the intermediate plate (6, 6A), said levels (L1, L2) being configured for two fluid flows, either of the same fluid kept separate or of two different fluids,
- wherein the manifold (1, 110) is fluidically connected to each of the heat exchangers (2, 3), in particular by brazing, and at least one of the heat exchangers (2, 3) is fixed to the first plate (5) or the second plate (7), either directly or via a connection block (34).

2. The assembly (100) according to claim 1, wherein the first plate (5) and/or the second plate (7) of the manifold (1, 110) comprise an assembly portion, such as a raised edge (21).

3. The assembly (100) according to claim 1 or 2, wherein the intermediate plate (6, 6A, 6B) of the manifold (1, 110) is a stamped plate with the corrugations (10).

4. The assembly (100) according to any preceding claim, wherein the manifold (1) is configured to integrate an internal heat exchanger (IHX) (35) where the intermediate plate (6) serves as a heat transfer surface between a first refrigerant flow on one side of the intermediate plate (6) and a second refrigerant flow on the other side of the intermediate plate (6).

5. The assembly (100) according to any preceding claim, wherein one heat exchanger is a water condenser (2) and another heat exchanger is a chiller (3), and wherein the manifold (1) is configured such that:
- subcooled refrigerant from the water condenser (2) flows through an inlet port (61) into the manifold (1), between the first plate (5) and the intermediate plate (6), and towards an outlet port (62) connected to an expansion valve (40); and
- low-pressure refrigerant from the chiller (3) flows through an inlet port (20A) into the manifold (1), between the intermediate plate (6) and the second plate (7), and towards an outlet port (20B) connected to a compressor (41).

6. The assembly (100) according to any preceding claim, wherein the manifold (1, 110) comprises a plurality of stacked plates (5, 6, 7, 8) configured to create at least one thermal isolation layer (31), and the isolation layer (31) is made of air within the stacked plates.

7. The assembly (100) according to any preceding claim, wherein the manifold (1) comprises a fluid transfer zone (44) configured to allow a fluid flow via channels from a heat exchanger (2), such as a water condenser, to a fluid component, such as a receiver dryer (42).

8. The assembly (100) according to claim 7, wherein the transfer zone (44) comprises a forward path directing fluid towards the fluid component (42) and a return path directing fluid back to the heat exchanger (2), and the transfer zone (44) comprises two distinct fluid levels separated by the intermediate plate (6).

9. The assembly (100) according to any preceding claim, wherein the first plate (5) of the manifold (1) further comprises additional holes (28) not connected with the channels (11) dedicated to heat exchange, said holes (28) being configured for degassing, and being connected to a receiver dryer (42).

10. The assembly (100) according to any preceding claim, wherein the manifold (110) comprises at least two intermediate plates (6A, 6B), each being sandwiched between plates (5, 7, 8) that are mainly flat, and wherein plates (5, 6A, 7) and plates (7, 6B, 8) respectively create different levels for fluid flows, and plates (5, 6A, 7) define a channel (65) to deliver refrigerant to two parallel branches each having an expansion valve (40) and a chiller (3), and plates (6B, 8) are added to create two additional channels (66) to deliver the refrigerant from each expansion valve (40) to the associated chiller (3).

11. The assembly (100) according to any preceding claim, wherein the manifold (110) is configured such that a high pressure channel (65) delivering refrigerant to expansion valves (40) is provided on one level, whereas a low pressure channel (68) delivering refrigerant from chillers (3) to an outlet block (68) is positioned on two levels (L3, L4).

12. The assembly (100) according to any preceding claim, wherein the manifold (1, 110) is configured to conduct fluid between components of a refrigerant loop (200).

13. The assembly (100) according to any preceding claim, wherein the intermediate plate comprises a channel around an external edge, and wherein the channel forms a closed volume that encloses the other channels transferring the refrigerant, and the manifold further comprises a port connected to this volume and a sensor, in particular a pressure sensor, configured to detect an internal leakage in said volume.

14. An air conditioning circuit (200) of the heat pump type, in particular of the direct type, incorporating an assembly (100) according to any preceding claim.
